# EUROPÄISCHE PATENTSCHRIFT

(11) **EP 3 315 709 B1**
(45) Veröffentlichungstag und Bekanntmachung des Hinweises auf die Patenterteilung: **31.10.2018**
(21) Anmeldenummer: 17184634.8
(22) Anmeldetag: 03.08.2017
(51) Int. Cl.: E06B 3/96, E06B 3/964, E06B 3/972, E06B 3/98, E06B 3/968, F16B 7/04

(54) **RAHMENPROFIL**
FRAME PROFILE
PROFILÉ DE CADRE

(30) Priorität: 25.10.2016 DE 102016120361
(43) Veröffentlichungstag der Anmeldung: 02.05.2018
(73) Patentinhaber: Achte display system GmbH, 40721 Hilden (DE)
(72) Erfinder: Nauen, Christoph, 40724 Hilden (DE)
(74) Vertreter: Patentanwälte Vomberg & Schart

(56) Entgegenhaltungen:
- DE-C2- 3 706 236
- GB-A- 2 310 240
- GB-A- 2 321 270

## Beschreibung

Die Erfindung betrifft ein Rahmenprofil, insbesondere zum Aufbau eines Leuchtengehäuses oder Spannrahmens für dünnwandige Bildträger aus Kunststofffolien oder Textilstoffen, bestehend aus einer Kammern und Nuten aufweisenden ersten und zweiten Rahmenzarge, die mittels eines Klemmkörpers lösbar aneinander befestigt sind, wobei die Rahmenzargen jeweils an ihren Enden eine senkrecht zu ihrer Längsachse liegende Stirnfläche aufweisen, wobei die zweite Rahmenzarge mit der ersten Rahmenzarge über den Klemmkörper verbunden ist, der übergreifend in einer Kammer der zweiten Rahmenzarge und einer Nut der ersten Rahmenzarge spannbar und lösbar angeordnet ist. Ein solches Rahmenprofil ist aus der DE 37 06 236 C2 bekannt.

Rahmenprofile der genannten Art werden insbesondere zu Werbezwecken verwendet. Spannrahmen oder Leuchtengehäuse können als Bilderrahmen zum Aufhängen oder auch als Standkörper bis hin zum Raumteiler ausgebildet sein. In Leuchtkästen ist entweder eine der großflächigen Seiten mit einer lichtdurchlässigen Kunststofffolie oder Textilbahn bespannt, die von Leuchten, insbesondere LED-Leuchten angestrahlt wird, die sich im Inneren des Leuchtkastens befinden, alternativ sind auch Leuchtkästen bekannt, bei denen die Vorder- und Rückseite entsprechende lichtdurchlässige Folien- oder Textilbahnbespannungen aufweisen. Der Vorteil solcher Leuchtkästen besteht darin, dass die verwendeten Kunststofffolien oder Textilstoffbahnen, die über Klemmleisten in Rahmenprofilen gehalten werden, leicht austauschbar sind, so dass das Rahmenprofil bei Bedarf mit einer neuen Bespannung versehen werden kann.

Darüber hinaus lassen sich die Rahmenprofile so gestalten, dass Eckverbinder und Rahmenzargen voneinander lösbar gestaltet sind, so dass das Rahmenprofil zum Transport entsprechend demontiert werden kann.

Die vorzugsweise verwendeten Rahmenzargen sind Stranggussprofile, die zu einem gewünschten Maß geschnitten werden. Nach dem Stand der Technik werden die Enden auf Gehrung geschnitten und jeweils mit einem Gehrungsstoß aneinander grenzende Hohlkammerprofile unter Einsatz von Eckverbindern miteinander verbunden. Die nach dem Stand der Technik bekannten Eckverbinder umfassen jeweils zwei Verbindungsschenkel, von denen jeweils einer in eine Nut oder Kammer einer Rahmenzarge eingreift und hierin verspannt wird.

Aus optischen Gründen sollen die Gehrungsstöße spaltlos aneinander grenzen, was nur dann möglich ist, wenn der Gehrungsschnitt passgenau ausgeführt worden ist. Aber selbst bei spaltlos im ungespannten Zustand aneinander liegenden Gehrungsschnitten geschieht es häufig, dass beim Einlegen und Spannen der Kunststofffolien oder Textilbahnen aufgrund der Spannkräfte geringfügige Verformungen auftreten, die sich auch im Gehrungsschnittbereich auswirken. Um dem entgegenzuwirken, wird in der DE 31 48 823 41 ein mehrteiliger Eckverbinder vorgeschlagen, der aus zwei Winkelstücken besteht, die verschachtelt miteinander in Eingriff zu stellen sind, bevor deren Verbinderschenkel in die jeweilige Verbindernut des angrenzenden Profils einschiebbar sind. Das spaltlose Aneinandergrenzen der beiden Profile wird durch diese Eckverbinder dadurch bewirkt, dass infolge der verschachtelten Anordnung der Winkelstücke beim Verspannen derselben eine Bewegung der Profile zueinander und somit auf den Gehrungsstoß zu erfolgt. Verspannt werden die Winkelstücke mit jeweils parallelen Schenkeln in einer Verbindernut durch Spreizen derselben, so dass jeweils ein Schenkel an einer Innenseite der Verbindungen zur Anlage gebracht wird. Die Handhabung eines solchen Eckverbinders ist jedoch aufwendig.

Um Abhilfe zu schaffen, wird in der DE 20 2015 100 148 U1 vorgeschlagen, dass wenigstens ein Verbinderschenkel des Eckverbinders an seiner zu der der Längserstreckung des Profils folgenden Nutöffnung weisenden und bezüglich der winkligen Anordnung der Verbinderschenkel innen liegenden Seite einen zur Anlage an der dem Boden der Verbindernut gegenüberliegenden Innenwand vorgesehenen stützabschnitt und einen benachbart hierzu an seiner von dem anderen Verbinderschenkel wegweisenden Seite befindlichen Stellabschnitt mit einer gegenüber der Anlagefläche des Stützabschnitts zurückversetzten Aussparung aufweist. Um den Verbinderschenkel im Bereich seines Stellabschnittes in der Verbindernut durch Reduzierung der Höhe der Aussparung zu verspannen, wird ein Spannglied verwendet. Der Aufbau dieses Eckverbinders ist relativ kompliziert, zudem ist die Handhabung aufwendig.

Schließlich sind nach dem Stand der Technik sogenannte Eckknoten bekannt, bei denen die Eckenverbinder über vorstehende Laschen, die in Kammern oder Nuten der Zargenleisten einschiebbar sind, verfügen. Die Verspannung des Eckverbinders erfolgt über Klemmschrauben oder ähnliches, Der Vorteil dieser Eckverbinder besteht darin, dass die verwendeten Rahmenzargen nicht auf Gehrung geschnitten werden müssen, bevor sie mit dem Eckverbinder verbunden werden. Der Nachteil besteht darin, dass sich diese Eckverbinder häufig optisch erkennbar von den Zargenprofilen absetzen und dass diese Eckverbinder einen relativ hohen Fertigungsaufwand erfordern.

Es ist daher Aufgabe der vorliegenden Erfindung, ein Rahmenprofil zu schaffen, das kostengünstig herstellbar, leicht handhabbar und in der Optik den Rahmenzargen angepasst ist.

Diese Aufgabe wird durch das Rahmenprofil nach Anspruch 1 gelöst, das dadurch gekennzeichnet ist, dass das Rahmenprofil ferner einen Eckverbinder aufweist, wobei der Eckverbinder eine L-förmige Dachfläche mit einem kurzen und einem langen Schenkel sowie mindestens eine darunter liegende Nutwand aufweist, wobei der kurze Schenkel die Nut unterhalb des langen Schenkels und die Nutwand vollständig nach außen abdeckt, wobei ferner zur Verbindung des Eckverbinders mit einer ersten Rahmenzarge ein Steckkörper als Teil des Eckverbinders vorgesehen ist, der vollständig in eine Kammer dieser ersten Rahmenzarge einschiebbar ist, und wobei die jeweilige Stirnfläche der ersten und zweiten Rahmenzarge an einer Stirnseite des Eckverbinders so anliegt, dass die Außenfläche des kurzen Schenkels des Eckverbinders bündig mit der entsprechenden Außenfläche der ersten Rahmenzarge abschließt, und die Außenfläche des langen Schenkels des Eckverbinders bündig mit der entsprechenden Außenfläche der zweiten Rahmenzarge abschließt, so dass die aneinander angrenzenden Außenflächen der Rahmenzargen und der anliegenden Eckverbinder eine ebene Oberfläche bilden.

Zunächst wird bei dieser Konstruktion der Vorteil genutzt, dass die im Handel erhältlichen Rahmenprofile nicht auf Gehrung geschnitten werden müssen, so dass dieser Arbeitsgang eingespart ist. Die Rahmenzargen werden auf das gewünschte Längenmaß geschnitten, wobei die Schnittfläche senkrecht zur Längsachse der Rahmenzarge liegt. Die neuen Eckverbinder können materialsparend hergestellt werden und lassen sich leicht montieren. Zur Montage ist lediglich der Steckkörper des Eckverbinders in eine Kammer einer Rahmenzarge einzuschieben, wonach die andere Rahmenzarge, in der zuvor ein Klemmkörper eingesteckt worden ist, auf den Eckverbinder zugeschoben und mit der ersten Rahmenzarge verspannt wird. Die L-förmige Dachfläche schließt jeweils zur benachbarten Rahmenzarge mit deren Oberfläche bündig ab, was sich zwangsläufig beim Einstecken und Verspannen ergibt. Durch das gewählte Klemmsystem können auch beim Einlegen und Verspannen einer Kunststofffolie oder einer Textilbahn in einem Leuchtkasten, für den das Rahmenprofil verwendet wird, keine Kräfte wirksam werden, die zu unansehnlichen Spaltöffnungen führen. Der Eckverbinder ist nach außen kaum sichtbar, weil er lediglich die offene Stirnfläche einer Rahmenzarge abdeckt. Der Eckverbinder kann zur Vermeidung von Verletzungen oder Beschädigungen mit abgerundeten Ecken ausgeführt sein.

Weiterbildungen der Erfindung sind in den Unteransprüchen beschrieben.

So wird vorzugsweise als Klemmkörper ein Zargenschloss verwendet, das insbesondere über eine Klemmschraube betätigbar ist, die eine Gewindebohrung einer Zargenprofilwand durchgreift. Solche Zargenschlösser sind nach dem Stand der Technik bekannt. Die verwendbaren Zargenschlösser besitzen zwei aneinander liegende Backen, deren Endbereiche scharnierartig ineinandergreifen sowie eine Spannschraube, welche die beiden Backen beim Eindrehen auseinanderdrückt. Die gegen überliegenden Endbereiche des Zargenschlosses entfernen sich dadurch relativ voneinander und verkeilen sich infolgedessen an korrespondierenden Stegen des Zargenprofils (als Teil einer hinterschnittenen Nut). Wird die Spannschraube gelockert, bewegen sich die Backen des Zargenschlosses wieder aufeinander zu, so dass die dem Stützprofil zugewandten Endbereiche der Backen ihren Klemmgriff lockern und die Stege des Zargenprofils freigeben. Solche Zargenschlösser sind preisgünstig herstellbar und leicht bedienbar.

Nach einer weiteren Ausgestaltung der Erfindung besitzt die Nut, die zwischen dem langen Schenkel der Dachfläche des Eckverbinders und der darunter angeordneten Nutwand liegt, eine gleich große Nutbreite wie die anliegende Rahmenzarge. Ferner endet die genannte Nutwand in einem Abstand zum kurzen Schenkel der Dachfläche, der ebenfalls der Nutbreite der anliegenden Rahmenzarge entspricht. Hierdurch wird vorzugsweise gewährleistet, dass der Eckverbinder eine Fortsetzung der betreffenden Nut der Rahmenzarge liefert.

Vorzugsweise sind die Rahmenzargenstranggussprofile, die sich leicht und günstig fertigen lassen. Die Stranggussprofile werden in maximal transportablen Längen hergestellt und zur weiteren Verarbeitung in gewünschte Längen geschnitten. Das Breiten- und Höhenmaß eines Rahmenprofils oder eines aus einem Rahmenprofil hergestellten Leuchtkasten ist somit frei wählbar. Verschnittmengen können erheblich minimiert werden.

Vorzugsweise bestehen die Eckverbinder und die Rahmenzargen aus Aluminium oder einem Kunststoff. Beide Materialien haben den Vorteil eines geringen Gewichtes.

Ein Ausführungsbeispiel ist in den Zeichnungen dargestellt. Es zeigen
- Fig. 1: eine Teilansicht eines Rahmenprofils in einer Explosionsdarstellung und
- Fig. 2: dasselbe Rahmenprofil im montierten Zustand.

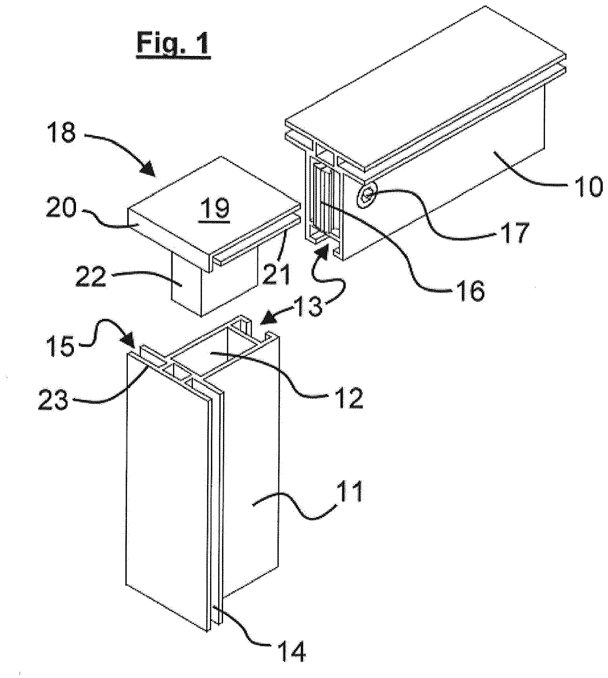

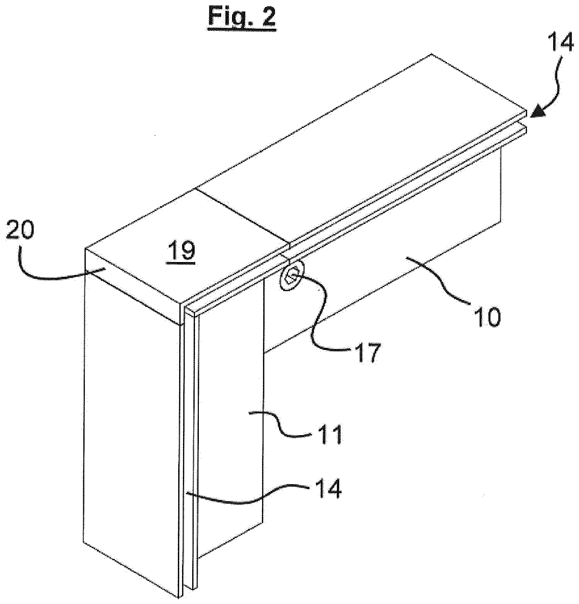

Die erfindungsgemäßen Rahmenprofile bestehen aus vier Rahmenzargen, von denen jeweils zwei Rahmenzargen gleich rang sind, so dass sich bei deren Verbindung ein Rechteckprofil ergibt. In Fig. 1 und 2 sind jeweils Teilabschnitte zweier Rahmenzargen 10, 11 dargestellt, die von ein und demselben Aluminium-Stranggussprofil stammen und durch entsprechendes Ablängen geschnitten worden sind. Die Rahmenzargen besitzen insbesondere dieselbe Querschnittsform mit mindestens einer Kammer 12, einer hinterschnittenen Nut 13 sowie randseitigen Nuten 14, 15. In die Kammer 12 der Zarge 10 ist ein Zargenschloss 16 eingesteckt, das über eine Klemmschraube 17 betätigbar ist, die in einer Gewindebohrung einer Zargenwand gehalten wird.

Der Eckverbinder 18 besitzt eine L-förmige Dachfläche mit einem langen Schenkel 19 und einem kurzen Schenkel 20. Unterhalb des langen Schenkels ist im Abstand eine Nutwand 21 angeordnet, die eine Nut bildet, die gleich groß ist wie die Nut 14 der Zarge 10. Die Nutwand 21 endet vor dem kurzen Schenkel 20 in einem Abstand, welcher der Nutbreite der Nut 14 der Rahmenzarge 11 entspricht.

Schließlich besitzt der Eckverbinder 18 noch einen Steckkörper 22, der bis auf ein Spiel passgenau der Form der Kamm er 12 entspricht. Zum Zusammenbau des Rahmenprofils wird der Eckverbinder 1B zunächst mit der Rahmenzarge 11 verbunden, indem der Steckkörper 22in die Kammer 12 bis zum Anschlag eingeschoben wird. Den Anschlag bildet die Stirnseite des kurzen Schenkels 20, die beim Einschieben des Steckkörpers 22 an die Stirnseite 23 der Rahmenzarge 11 anstößt und dort zur Anlage kommt. Die Außenfläche des kurzen Schenkels 20 des Eckverbinders 18 schließt bündig mit der entsprechenden Außenfläche der Rahmenzarge 11 ab, so dass hier eine glatte Fläche entsteht. Die Kante zwischen den Außenflächen des kurzen und des langen Schenkels 19,20 kann abgerundet sein oder eine Fase aufweisen.

Zur Befestigung der Rahmenzarge 10 an dem Eckverbinder 18 wird zunächst das Zargenschloss 16 in die entsprechende Kammer eingeführt und die Klemmschraube 17 in eine vorgesehene Gewindebohrung der Zargenwand eingeschraubt. Das Vorderteil der Klemmschraube greift in eine entsprechende Bohrung einer der Backen des Zargenschlosses 16 ein, so dass beim Drehen der Klemmschraube die Backen spreizbar sind. Das Zargenschloss besitzt an seinem hervorstehenden Teil L-förmige Auskragungen, die beim Betätigen des Spannschlosses in die hinterschnittene Nut 13 des Zargenprofils 11 eingreifen. Das Einschieben der Klemmbacken in die Öffnung der Nut 13 und die Betätigung der Klemmschraube 17 führt dann zur Klemmung, das heißt zur Fixierung des Zargenprofils 10 an dem Eckverbinder 18. Da in jeder Ecke des Rahmenprofils eine solche Fixierung vorgenommen wird, ist der Rahmen auch formstabil.

Fig. 2 zeigt, dass unterhalb der jeweiligen Außenflächen der Zargenprofile sowie des L-förmigen Daches des Eckverbinders eine durchgehende Nut auf beiden Seiten vorliegt, die zur Fixierung von spannleisten verwendet werden kann.

## Patentansprüche

1. Rahmenprofil, insbesondere zum Aufbau eines Leuchtengehäuses oder Spannrahmens für dünnwandige Bildträger aus Kunststofffolien oder Textilstoffen, bestehend aus einer Kammern (12) und Nuten (13, 14, 15) aufweisenden ersten (11) und zweiten (10) Rahmenzarge, die mittels eines Klemmkörpers lösbar aneinander befestigt sind, wobei die Rahmenzargen (10, 11) jeweils an ihren Enden eine senkrecht zu ihrer Längsachse liegende Stirnfläche aufweisen, wobei die zweite Rahmenzarge (10) mit der ersten Rahmenzarge (11) über den Klemmkörper verbunden ist, der übergreifend in einer Kammer der zweiten Rahmenzarge (10) und einer Nut (13) der ersten Rahmenzarge (11) spannbar und lösbar angeordnet ist,
**dadurch gekennzeichnet, dass**
das Rahmenprofil ferner einen Eckverbinder (18) aufweist, wobei der Eckverbinder (18) eine L-förmige Dachfläche mit einem kurzen und einem langen Schenkel sowie mindestens eine darunter liegende Nutwand (21) aufweist, wobei der kurze Schenkel (20) die Nut unterhalb des langen Schenkels (19) und die Nutwand (21) vollständig nach außen abdeckt, wobei ferner zur Verbindung des Eckverbinders (18) mit einer ersten Rahmenzarge (11) ein Steckkörper (22) als Teil des Eckverbinders vorgesehen ist, der vollständig in eine Kammer (12) dieser ersten Rahmenzarge (11) einschiebbar ist, und wobei die jeweilige Stirnfläche der ersten und zweiten Rahmenzarge (10, 11) an einer Stirnseite des Eckverbinders (18) so anliegt, dass die Außenfläche des kurzen Schenkels (20) des Eckverbinders bündig mit der entsprechenden Außenfläche der ersten Rahmenzarge (11) abschließt, und die Außenfläche des langen Schenkels (19) des Eckverbinders bündig mit der entsprechenden Außenfläche der zweiten Rahmenzarge (10) abschließt, so dass die aneinander angrenzenden Außenflächen der Rahmenzargen und der anliegenden Eckverbinder eine ebene Oberfläche bilden.

2. Rahmenprofil nach Anspruch 1, **dadurch gekennzeichnet, dass** der Klemmkörper ein Zargenschloss (16) ist, das vorzugsweise über eine Klemmschraube (17) betätigbar ist, die eine Gewindebohrung einer Zargenprofilwand durchgreift.

3. Rahmenprofil nach einem der Ansprüche 1 oder 2, **dadurch gekennzeichnet, dass** die Nut, die zwischen dem langen Schenkel (19) der Dachfläche des Eckverbinders (18) und der darunter angeordneten Nutwand (21) liegt, eine gleichgroße Nutbreite wie die anliegende Rahmenzarge (10) aufweist und dass die genannte Nutwand (21) in einem Abstand zum kurzen Schenkel (20) der Dachfläche endet, der ebenfalls der Nutbreite der anliegenden Rahmenzarge (11) entspricht.

4. Rahmenprofil nach einem der Ansprüche 1 bis 3, **dadurch gekennzeichnet, dass** die Rahmenzargen (10, 11) Stranggussprofile sind.

5. Rahmenprofil nach einem der Ansprüche 1 bis 4, **dadurch gekennzeichnet, dass** die Eckverbinder (18) und die Rahmenzargen (10, 11) aus Aluminium oder einem Kunststoff bestehen.

## Claims

1. Frame profile, in particular for the construction of a lamp housing or clamping frame for thin-walled image carriers made of plastic films or textile materials, consisting of first (11) and second (10) frames having chambers (12) and grooves (13, 14, 15) and being detachable fixed together via a clamping body, wherein the frames (10, 11) each have at their ends a perpendicular to their longitudinal axis lying end face, the second frame (10) being connected to the first frame (11) via the clamping body, which is arranged to be clamped and detached comprehensively crossing in a chamber of the second frame (10) and a groove (13) of the first frame (11),
**characterized in that**
the frame profile has additionally a corner connector (18) which has a L-shaped roof surface with a short and a long leg and at least one groove wall (21) underneath, the short leg (20) covers the groove below the long leg (19) and the groove wall (21) completely outwards, wherein further for the connection of corner connector (18) to the first frame (11) a plug body (22) as a part of the corner connectors (18) is provided, the plug body is insertable completely into the chamber (12) of this first frame (11), and wherein the respective end face of the first and second frame (10, 11) rests against an end face of the corner connector (18) so that the outer surface of the short leg (20) of the corner connector are flush with the respective outer surface of the first frame (11), and that the outer surface of the long leg (19) of the corner connections are flush with the respective outer surface of the second frame (10), so that the against each other adjacent outer surfaces of the frame and the abutting corner connectors form a flat surface.

2. Frame profile according to claim 1, **characterized in that** the clamping body is a frame lock (16) which is operable preferably via a clamping screw (17) engaging in a thread hole of a frame profile wall.

3. Frame profile according to one of the claims 1 or 2, **characterized in that** the groove lying between the long leg (19) of the roof surface of the corner connector (18) and the groove wall (21) arranged beneath have an equal groove width as the adjacent frame (10) and that the said groove wall (21) ends in a distance to the short leg (20) of the roof surface also corresponding to the groove width of the adjacent frame (11).

4. Frame profile according to one of the claims 1 to 3, **characterized in that** the frames (10, 11) are continuous casting profiles.

5. Frame profile according to one of the claims 1 to 4, **characterized in that** the corner connector (18) and the frames (10, 11) consist of aluminium or of plastic.

## Revendications

1. Profilé de cadre, en particulier pour la construction d'un boîtier de lampe ou d'un cadre de serrage pour des supports d'image à parois minces en feuilles en matière plastique ou en textiles, se composant de premier (11) et de deuxième (10) châssis de cadre qui présentent des chambres (12) et des rainures (13, 14, 15) et qui sont fixés entre eux de manière amovible au moyen d'un corps de serrage, dans lequel lesdits châssis de cadre (10, 11) ont chacun à leurs extrémités une face frontale située perpendiculairement à leur axe longitudinal, dans lequel le deuxième châssis de cadre (10) est relié au premier châssis de cadre (11) par le biais dudit corps de serrage qui est disposé à chevauchement, de manière à pouvoir être serré et amovible, dans une chambre du deuxième châssis de cadre (10) et une rainure (13) du premier châssis de cadre (11), **caractérisé par le fait que** ledit profilé de cadre comprend en outre un raccord d'angle (18), dans lequel ledit raccord d'angle (18) présente une surface de toit en forme de L ayant une branche courte et une branche longue ainsi qu'au moins une paroi de rainure (21) située là-dessous, dans lequel la branche courte (20) recouvre complètement vers l'extérieur la rainure au-dessous de la branche longue (19) et la paroi de rainure (21), dans lequel, en outre, pour relier ledit raccord d'angle (18) à un premier châssis de cadre (11), un corps à emboîtement (22) est prévu en tant que partie du raccord d'angle, qui peut être engagé complètement dans une chambre (12) de ce premier châssis de cadre (11), et dans lequel la face frontale respective des premier et deuxième châssis de cadre (10, 11) s'applique sur une face frontale du raccord d'angle (18) de telle manière que la surface extérieure de la branche courte (20) du raccord d'angle affleure par rapport à la surface extérieure correspondante du premier châssis de cadre (11) et que la surface extérieure de la branche longue (19) du raccord d'angle affleure par rapport à la surface extérieure correspondante du deuxième châssis de cadre (10), de sorte que les surfaces extérieures contiguës les unes aux autres des châssis de cadre et des raccords d'angle en appui forment une surface plane.

2. Profilé de cadre selon la revendication 1, **caractérisé par le fait que** ledit corps de serrage est une serrure de châssis (16) qui, de préférence, peut être actionnée par l'intermédiaire d'une vis de serrage (17) qui passe à travers un trou taraudé d'une paroi de profilé de châssis.

3. Profilé de cadre selon l'une quelconque des revendications 1 ou 2, **caractérisé par le fait que** la rainure qui est située entre la branche longue (19) de la surface de toit du raccord d'angle (18) et la paroi de rainure (21) située là-dessous présente une largeur de rainure égale à celle du châssis de cadre (10) en appui et que ladite paroi de rainure (21) se termine à une distance par rapport à la branche courte (20) de la surface de toit, qui correspond, elle aussi, à la largeur de rainure du châssis de cadre (11) en appui.

4. Profilé de cadre selon l'une quelconque des revendications 1 à 3, **caractérisé par le fait que** les châssis de cadre (10, 11) sont des profilés de coulée continue.

5. Profilé de cadre selon l'une quelconque des revendications 1 à 4, **caractérisé par le fait que** les raccords d'angle (18) et les châssis de cadre (10, 11) sont réalisés en aluminium ou en matière plastique.
